# EUROPEAN PATENT SPECIFICATION

(11) **EP 0 437 981 B1**
(45) Date of publication and mention of the grant of the patent: **30.11.1994**
(21) Application number: 90314427.7
(22) Date of filing: 28.12.1990
(51) Int. Cl.: C08G 69/44

(54) **Polyamide-esters, processes for the manufacture thereof and intermediates therefor**
Polyamid-Ester, Verfahren zu ihrer Herstellung und Zwischenverbindungen dafür
Polyamide esters, leurs procédés de manufacture et intermédiaires pour ces procédés

(30) Priority: 16.01.1990 US 465290; 16.01.1990 US 465666
(43) Date of publication of application: 24.07.1991
(73) Proprietor: TEXACO CHEMICAL COMPANY, Houston, Texas 77056 (US)
(72) Inventor: Speranza, George Phillip, Austin, Texas 78757 (US); Lin, Jiang-Jen, Houston, Texas 77083 (US)
(74) Representative: Green, Mark Charles

(56) References cited:
- EP-A- 0 027 944
- US-A- 4 373 085
- US-A- 4 839 441

## Description

The present invention relates to polyamide esters, to processes for the manufacture thereof and to novel bis-hydroxy diamides for use therein.

### Background of the Invention

Triethylene and tetraethylene glycol diamines may be continuously produced from glycols catalytically. The triethylene glycol diamine and tetraethylene glycol diamine products are known under the trade names JEFFAMINE® EDR-148 Amine and JEFFAMINE® EDR-192 Amine, respectively, as made by Texaco Chemical Co. These materials are useful as intermediates in the preparation of hydrophilic nylon resins, and as epoxy curing agents. However, in the preparation of polyethylene glycol diamines, due to moderate conversions, there are also produced significant quantities of by-products, bottom products or residues, and it would be beneficial if uses for these materials, such as triethylene glycol monoamine and tetraethylene glycol monoamine, could be discovered.

It is, of course, known to react materials having active hydrogens with compounds having carboxylic acid groups. For example, US-A-4123422 teaches amide modified saturated polyester polyols where the polyester polyol backbone is made from a polyhydric alcohol having 2 to 15 carbon atoms and a polybasic carboxylic acid having 4 to 14 carbon atoms. After the backbone is formed, it is modified with a primary or secondary amine of the formula N(H)(R)ₐ(C_{y}H_{2y}OH)_{b}, where R is a hydrogen or an alkyl group of 1 to 4 carbon atoms, y is 2 or 3, a is 0 or 1, b is 1 or 2, and the sum of a + b is 2. These amine modified saturated polyester polyols are useful in two-package urethane coating systems. A crystalline polyamide which has improved tensile strength and which has a heat deflection temperature in excess of 240°C. when filled is formed from dicarboxylic acid compounds comprising compounds of terephthalic acid and isophthalic acid in a molar ratio of at least 80:20 to about 99:1 and diamines comprising hexamethylene diamine and trimethylhexamethylene diamine in a molar ratio of about 98:2 to about 60:40, according to US-A-4617342.

Hot melt adhesives are also related to these kinds of materials. For example US-A-4656242 describes that poly(ester-amide) polymers made from an acid component and a substantially equivalent amount of an amine and a diol component are suitable as hot melt adhesives for bonding plastics. The acid component has 10-80 equivalent percent of a dimer acid having about 36 carbon atoms and 40-90 equivalent percent of a linear dicarboxylic acid. The amine and diol component has from 40-90 equivalent percent of an organic diamine and 10-60 equivalent percent of a diol. Also of interest is US-A-4611051 which teaches poly(esteramide) hot melt adhesives prepared from condensation of a mixture of polymeric fatty acids and 1,18-octadecanedicarboxylic acid, and a substantially equivalent proportion of a mixture of a polyamine and a polyol. Suitable polyamines include ethylenediamine, 1,3-propanediamine, 1,4-butanediamine, 1,6-hexamethylene-diamine, piperazine, and 4,4'-methylene-bis-(cyclohexylamine). Appropriate diols are ethylene glycol, 1,3-propanediol, 1,4-butanediol, 1,6-hexamethylenediol, cyclohexane-methanol, polyethylene glycol and polybutylene glycol.

In US-A-4373085 polyesteramides are prepared by condensing (A) dimerized fatty acids having 16 to 44 carbon atoms, (B) a diamine having a formula of NH₂-R-NH₂ where R is an aliphatic hydrocarbyl having 3 to 36 carbon atoms and (C) aminoethoxy-ethanol and at least one dicarboxylic acid having the formula R''OOC-R'-COOR'' where R' is a hydrocarbyl of 4 to 12 carbon atoms and R'' is H or alkyl having 1 to 8 carbon atoms. US-A-4397991 describes similar products. The polyesteramides are used as adhesives which combine good elongation, quick setting times and good low temperature flexibility.

### Summary of the Invention

Accordingly, it is an object of the present invention to provide novel polyamide-esters and processes for their production.

It is another object of the present invention to provide a process for the production of polyamide-esters that employs by-products from the manufacture of polyethylene glycol polyamines.

Another object of the invention to provide a method for making these polyamide-esters that is relatively straight-forward.

In carrying out these and other objects of the invention, there is provided, in one form, novel polyamide-esters produced by first reacting a polyethylene glycol monoamine having the formula NH₂-(CH₂CH₂O)x-H, where x ranges from 3 to 6, with a first dicarboxylic acid and a second dicarboxylic acid to form the polyamide-esters. The first and second dicarboxylic acids are independently aliphatic or aromatic dicarboxylic acids, with the proviso that the first and second acids must be different if they are both aliphatic.

### Detailed Description of the Invention

It has been discovered that a series of mixed polyamideesters may be prepared from polyethylene glycol monoamines, such as triethylene glycol monoamine (TEGMA) and tetraethylene glycol monoamine (T₄EGMA), which are by-products from the preparation of ethylene glycol diamines (the JEFFAMINE® EDR-series amines) as described above, according to a reaction scheme as schematically set forth below: 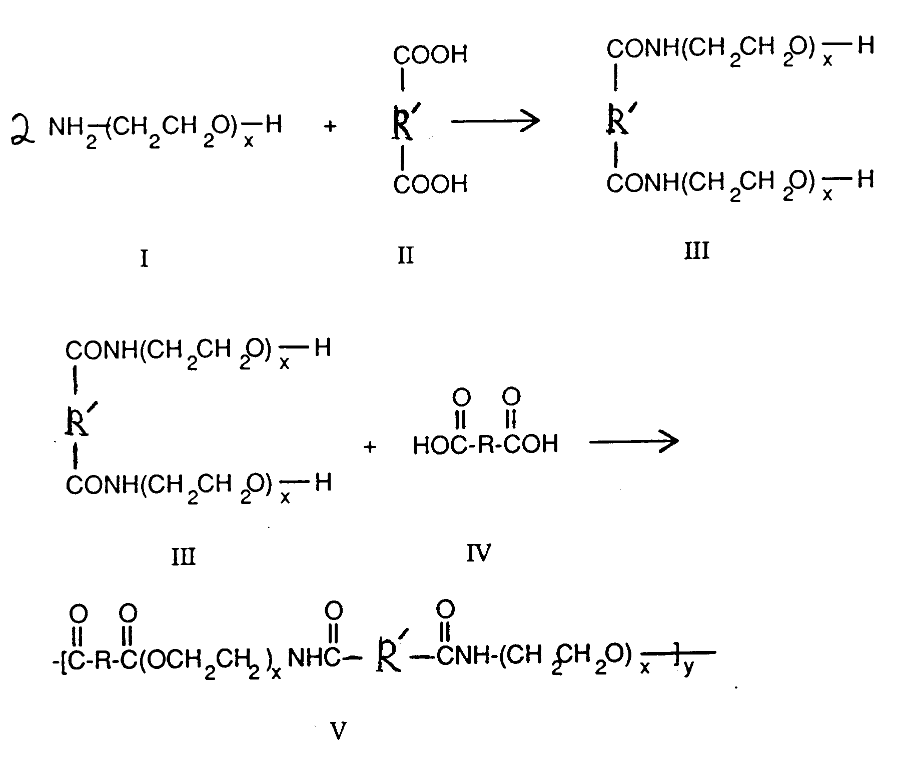
where R and R' are alkylene or arylene moieties having from 3 to 34 carbon atoms and may be the same or different, with the proviso that if both R and R' represent aliphatic dicarboxylic acid radicals, R and R' must be different, where x ranges from 3 to 6, and y ranges from 2 to 50 preferably 2-30. Compound (I) refers to the suitable polyethylene glycol monoamine by-products useful as reactants herein, where x has the same definition as above, and compound (II) is a dicarboxylic acid. Compound (III) is a novel bis-hydroxy amide intermediate.

Compound (III) is reacted with an additional dicarboxylic acid (IV) where R is as defined above to give the compound (V) of the present invention. This two-step process comprises a further aspect of the present invention.

The polyamide-ester or compounds (V) may also be produced by reacting the first dicarboxylic acid (II) with a second dicarboxylic acid of the formula HOOC-R-COOH and a polyethylene glycol monoamine having the formula NH₂-(CH₂CH₂O)ₓ-H. This latter method is a one-step approach as opposed to the two-stage approach outlined in the preceding paragraph.

In the definitions given above x may in its broadest embodiment range from 3 to 6, preferably from 3 to 5, most preferably from 3 to 4. With respect to the suitable dicarboxylic acids, R in one aspect may be an alkylene or arylene group having from 3 to 10 carbon atoms, and in another aspect from 4 to 9 carbon atoms.

Compound (II) is a dicarboxylic acid and R' may be an alkyl or an aryl moiety having from 3 to 34 carbon atoms, preferably 4 to 20 carbon atoms, most preferably 4 to 9. In another aspect of the invention, the dicarboxylic acid may be selected from the group consisting of adipic acid, terephthalic acid, isophthalic acid, t-butyl isophthalic acid, 1,1,3-trimethyl-5-carboxy-3-(p-carboxyphenyl) indane also known as phenylindane dicarboxylic acid or PIDA and mixtures thereof. In yet another aspect, the dicarboxylic acid may be "dimer" acid which is mainly a C-36 dicarboxylic acid. This product is prepared by dimerizing unsaturated fatty acids. The esters of these acids may also be used.

The first and second dicarboxylic acids may be the same as each other or different; however, if both the first and second dicarboxylic acids are aliphatic, they must be different. If the first and second dicarboxylic acids are aromatic, they may be the same or different. For example, the aromatic dicarboxylic acids may have the formula: 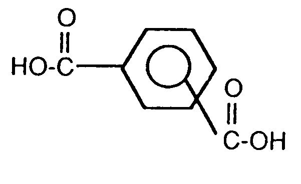
In the reaction of this invention, by either the one-stage or two-stage method, the temperature may range from about 220 to about 290°C. and more preferably from about 240 to about 260°C. The suitable pressure conditions may range from about 0.13 kPa (1 mm) to about 99 kPa (760 mm). Appropriate catalysts for the one-stage method or the second stage of the two-stage method include, but are not limited to Ti(O-i-Pr)₄ - titanium isopropoxide; other alcoholates of titanium such as tetra-butyl titanium derivatives; compounds of the formula Ti(OR)₄ where R is an alkyl radical having from 1 to 8 carbon atoms; metal salts of carboxylic acids such as zinc, antimony and manganese and mixtures thereof.

The present invention relates in a further aspect to novel bis-hydroxy diamides (III) useful as intermediates in the present invention. 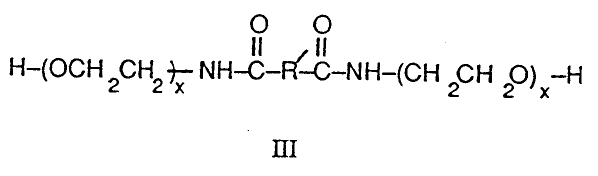
where x ranges from 3 to 6, preferably 3 to 5 and most preferably from 3 to 4.

In a process for the selective formation of the intermediates of formula (III), at least two moles of the polyethylene glycol monoamine are reacted with one mole of the first dicarboxylic acid in the presence of heat, from approximately 180 to about 250°C as a narrower range, where a broad temperature range for this reaction is from about 160 to about 280°C. Preferably, the molar ratio of monoamine to dibasic acid is about 2:1. No catalyst is required for this reaction, although one may be yet discovered that might prove beneficial. The reaction may also be conducted at atmospheric pressure. The reaction is quite selective yielding the bis-hydroxy diamides in nearly quantitative yield. The products are light-colored solids or liquids, depending on the starting materials.

The intermediate formed thereby is reacted with the second dicarboxylic acid in the presence of a catalyst.

The reactions of NH₂(CH₂CH₂O)ₓ-H proceed well with aliphatic dibasic acids when x is 3 or 4. Two moles of polyethylene glycol monoamine may be allowed to react with one mole of the dibasic acid. Some polymeric material is obtained, especially in the case of aromatic dicarboxylic acids, when higher reaction temperatures are required. To prepare these intermediates more selectively, a higher ratio of polyethylene glycol monoamine to dibasic acid is suggested. Dialkyl and diaryl esters may be used instead of the corresponding dibasic acids. This fact may be noteworthy in the case of 2,6-naphthalene dicarboxylic acid where the commercial grade of the dimethyl ester is much better than the dicarboxylic acid.

In reactions wherein at least two moles of glycol amine are allowed to react with a dibasic acid little, if any, undesired cyclic product is obtained. For example, if glutaric, adipic or pimelic acid is allowed to react with triethylene glycol monoamine, some "crown" like products are obtained. The reaction using adipic acid and triethylene glycol monoamine proceeds to a certain extent as shown below: 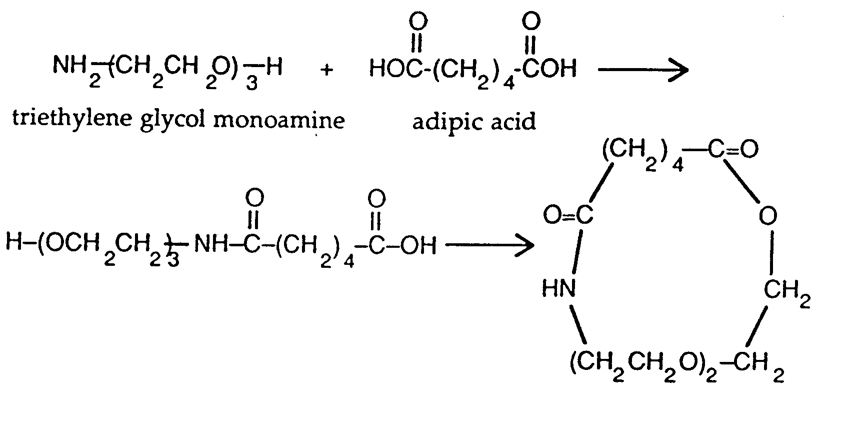
The invention will now be illustrated by the following non-limiting examples.

### Example 1

### Reaction of Adipic Acid with Two Moles of Triethylene Glycol Monoamine

To a 500 ml 3-necked flask equipped with a stirrer, thermometer and Dean-Stark trap was added 73 g. of adipic acid (0.5 moles) and 150 g. of triethylene glycol monoamine (1 mole). The contents were heated at 192-195°C. for about one hour after which 14 ml of water was collected. After an additional three hours at 200°C., a total of 15.4 ml of water was collected. The product was heated an additional hour at 200°C. and 30 mm. (4kPa) The off-white solid weighed 203.5 g., was water soluble and melted at 34°C. The total acetylatables was 4.92 meq/g. which gives a molecular weight of 406 (actual 408). The saponification number was 15.41 mg. KOH/g. which was determined by refluxing with alcoholic sodium hydroxide This indicates only 5.4% of the product reacted with potassium hydroxide ― or from another point of view this amide is hard to hydrolyze ― in fact, all of the hydrolysis took place at an ester linkage., since NMR showed an ester to hydroxyl linkage ratio of about 1.1 to 32.3. Thus, the reaction was not 100% amide, but was selective in the order of 95%. There was no unreacted amine. The weight average molecular weight was 407 and the number average molecular weight was 407 by Gel Permeation Chromatography (GPC); the theoretical molecular weight was 408. These results prove the selectivity involved.

### Example 2

### Reaction of Adipic Acid with Two Moles of Tetraethylene Glycol Monoamine

To a 500 ml, 3-necked flask equipped with a stirrer, thermometer and Dean-Stark trap was added 73 g. of adipic acid and 193 g. of T₄EGMA. The contents were heated for three hours at 185-193°C. after which 14 ml of water was collected. The product was heated at 193°C. for one hour under full aspirator vacuum. The product weighed 245.1 g. and was a water soluble wax that melted at about 30°C. The NMR spectra showed the hydroxyl to ester peak to be 23:1 and there was no amine in the product. The product appeared fairly pure, both by NMR and GPC. The weight average molecular weight by GPC was 509 and the number average was 507 (theoretical = 496).

Additional examples were conducted in a similar fashion, and the reactants and product properties are summarized in Table I. Table I illustrates that the product properties depend on the starting materials.

**TABLE I**

| Diols with Amide Linkages | | | | | |
|---|---|---|---|---|---|
| Ex. | Carboxylic Acid | Hydroxyamine | Properties | | |
| | | | Hydroxyl No. meq/g. (Theory) | | |
| 3 * | Adipic acid | DGA | 5.9 (6.0) | | Solid, creamy, light brown, opaque |
| 4 * | Terephthalic acid | " | 2.5 (5.5) | | Solid, brown, hard, transparent |
| 5 * | Isophthalic acid *t*-Butyl IPA | " | 3.6 (5.5) | | Solid, soft, brown, transparent |
| 6 * | PIDA | " | 3.4 (4.0) | | Solid, glass-like, transparent, brown, brittle |
| 7 * | NDC | " | ― ― | | Solid, hard, black |
| 8 | Adipic acid | TEGMA | 4.9 (4.9) | | ― |
| 9 | Terephthalic acid Isophthalic acid *t*-Butyl IPA | " | 4.5 (4.7) | | Solid, creamy white |
| 10 | PIDA NDC Trimesic acid | " | 2.8 (3.4) | | Solid, hard, transparent, brown |
| 11 | Adipic acid | T4EGMA | ― ― | | Solid, creamy, white |
| 12 | Terephthalic acid | " | 3.70 (3.88) | | Liquid, brown, transparent |
| 13 | Isophthalic acid | " | 3.55 (3.75) | | " |
| 14 | *t*-Butyl IPA | " | 3.30 (3.47) | | " |
| 15 | PIDA NDC | " | 2.84 (2.94) | | Semisolid, brown, elastomeric |

| | | | | | |
|---|---|---|---|---|---|
| * Examples 3-7 utilise DGA and do not fall within the scope of the present invention. | | | | | |

### Example 16

### Polyamide-ester from Terephthalic Acid ― TEGMA Adduct and Terephthalic Acid (1:1)

To a 250-ml, 3-necked flask equipped with a thermometer, a Dean-Stark trap, a stirrer and nitrogen-inlet line were charged the 1:2 adduct of terephthalic acid - TEGMA (81.0 g., 0.186M) and terephthalic acid (24.9 g.; 0.15M) and Ti(O-*i*-Pr)₄ (0.53 g.). The mixture was heated to 200-220°C. for 2 hours, 220-240°C. for two hours, and 240°C. for 20 minutes under vacuum. The product was a brown, hard solid. The H-nmr analysis showed the structure of a polyamide-ester.

### Example 17

### Polyamide-ester from Terephthalic Acid ― TEGMA Adduct and Adipic Add (1:1)

Similar procedures to those of Example 1 were used herein, except that the 81.0 g. (0.186M) of the adduct was used together with 27.2 g. (0.186M) of adipic acid and Ti(O-*i*-Pr)₄ (0.5 g.). Under conditions of 200-220°C. for 2 hours, 220-245°C. for two hours and 240°C. under vacuum for 20 minutes, the product produced was a soft, deep brown solid. The H-nmr analysis verified the structure of a polyamide-ester.

### Example 18

### Polyamide-ester from Terephthalic Acid and TEGMA (1:1 molar ratio)

To a 250-ml 3-necked flask equipped with a thermometer, a Dean-Stark trap, a stirrer and nitrogen-inlet line were charged terephthalic acid (66.4 g., 0.4M) and TEGMA (59.6 g., 0.4M). The mixture was heated to 220°C. for 2 hours and 245-250°C. under vacuum for 2 hours. The product was a tacky, brown solid.

### Example 19

### Polyamide-ester from Terephthalic Acid and TEGMA (1:1 molar ratio)

The experimental procedures of Example 18 were repeated except 0.6 ml Ti(O-*i*-Pr)₄ was used as a catalyst, and conditions of 1 hour at 185°C., followed by 240-250°C. under vacuum of 1 hour were employed. A tacky, brown solid product (insoluble in water, methanol or acetone) was obtained.

### Example 20

### Polyamide-ester from Terephthalic Acid, Adipic Acid and T₄EGMA (1:1:2 molar ratio)

To a 250-ml, 3-necked flask equipped with a thermometer, a Dean-Stark trap, a magnetic stirrer and nitrogen-inlet line were charged the terephthalic acid (24.9 g., 0.15M), adipic acid (21.9 g., 0.15M), tetraethylene glycol monoamine (T₄EGMA, from Texaco Chemical Co.; 57.9 g., 0.30M) and Ti(O-*i*-Pr)₄ (0.52 g.). The mixture was heated to 200°C. for 2 hours, 230°C. for two hours, and then subjected to reduced pressure for 30 minutes at 230°C. A grey-colored, soft solid (87 g.) was recovered. The H-nmr analysis indicated the structure of a polyamide-ester composition.

### Example 21

### Polyamide-ester from Terephthalic Acid - T₄EGMA Adduct and Adipic Acid (1:1 molar ratio)

To a 250-ml, 3-necked flask equipped with a thermometer, a Dean-Stark trap, a magnetic stirrer and nitrogen-inlet line were charged the adduct of terephthalic acid - tetraethylene glycol monoamine (51.5 g., 0.2M), adipic add (14.6 g., 0.2M) and Ti(O-*i*-Pr)₄ (0.33 g.). The mixture was heated to 220°C. for 2 hours, 240°C. for two hours, and under highly reduced pressure for 30 minutes at 240°C. An amber, soft solid (46 g.) was obtained. The H-nmr analysis indicated the structure of a polyamide-ester.

It may thus be seen that novel polyamide-esters may be made according to two methods of this invention. These materials may be used alone as solids or copolymerized with other materials.

It is possible to prepare linear polyester polyamides from 1:1 molar ratios of aliphatic dicarboxylic acids and polyglycol amines when the dicarboxylic acid groups fall outside the family of glutaric, adipic and pimelic. For example, when sebacic acid was allowed to react with diethylene glycol monoamine for 2 hours at 200-242°C. a linear polyester polyamide was prepared with a molecular weight of 2000. This is outside the present invention. In another preparation, when sebacic acid was heated with triethylene glycol monoamine at 240°C. for four hours and at 200°C. and one mm (133 Pa) for 30 minutes, a white solid melting at 62-63°C. was obtained. Its ester to primary hydroxyl ratio (by NMR) was 6:1 indicating largely linear product.

Many modifications may be made in the process of this invention without departing from the spirit and scope thereof which are defined only in the appended claims. For example, one skilled in the art may discover a new catalyst, or reaction condition, which may not be explicitly recited herein, but which is nevertheless anticipated, and which would give desirable results.

### GLOSSARY

- DGA: Diethylene glycol monoamine (DEGMA) or Diglycolamine® Agent made by Texaco Chemical Company.
- IPA: Isophthalic acid.
- NDC: Naphthalene dicarboxylic acid ― esters of this acid are preferred because of their relatively higher purity.
- TEGMA: Triethylene glycol monoamine.
- T₄EGMA: Tetraethylene glycol monoamine.
- T₅EGMA: Pentaethylene glycol monoamine.

## Claims

1. A process for the preparation of a polyamide ester which comprises reacting a polyethylene glycol monoamine having the formula NH₂-(CH₂CH₂O)ₓ-H, where x ranges from 3 to 6, with a first dicarboxylic acid and a second dicarboxylic acid to form the polyamide-ester, where the first and second dicarboxylic acids are independently aliphatic or aromatic dicarboxylic acids, with the proviso that the first and second acids must be different if they are both aliphatic.

2. A process as claimed in claim 1 characterized in that the dicarboxylic acids have the formula HOOC-R-COOH, where R is alkylene or arylene having from 3 to 34 carbon atoms.

3. A process as claimed in claim 1 or claim 2 characterized in that one of the dicarboxylic acids is terephthalic acid.

4. A process as claimed in any one of claims 1 to 3 which employs a catalyst of formula Ti(OR)₄ where R is an alkyl radical having from 1 to 8 carbon atoms; zinc, antimony and manganese salts of carboxylic acids; and mixtures theeof.

5. A process as claimed in any one of claims 1 to 4 which comprises:
(a) reacting a polyethylene glycol monoamine having the formula NH₂-(CH₂CH₂O)ₓ-H, where x ranges from 3 to 6, with a first dicarboxylic acid to form an intermediate; and
(b) reacting the intermediate with at least one second dicarboxylic acid to form the polyamide-ester.

6. A process as claimed in claim 5 wherein the polyethylene glycol monoamine is reacted with the first dicarboxylic acid in the absence of a catalyst but in the present of heat and the intermediate formed thereby is reacted with the second dicarboxylic acid in the presence of a catalyst.

7. A polyamide-ester of formula: 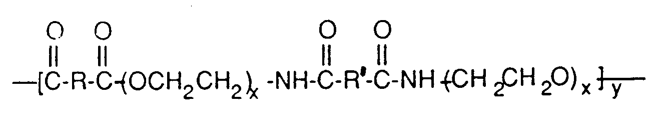 where R and R' represent dicarboxylic acid radicals, each having from 3 to 34 carbon atoms, wherein if both R and R' represent aliphatic dicarboxylic acid radicals R and R' must be different, R and R' may be the same or different; x ranges from 3 to 6; and y ranges from 2 to 50.

8. A polyamide-ester as claimed in claim 7 where R and R' each have from 4 to 10 carbon atoms, x ranges from 3 to 5, and y ranges from 2 to 30.

9. A polyamide-ester as claimed in claim 7 or claim 8 of formula:

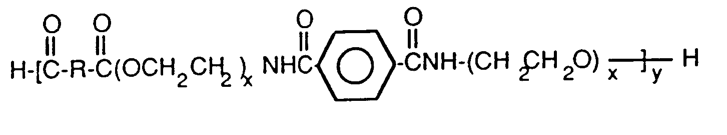

10. A bis-hydroxy diamide of formula: 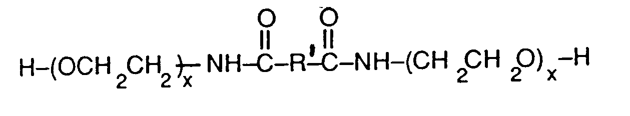 where R' is an alkylene or arylene moiety having from 3 to 34 carbon atoms and where x ranges from 3 to 6.

11. A process for the preparation of a bis-hydroxy diamide as claimed in claim 10 which comprises reacting at least two moles of a polyethylene glycol monoamine per mole of a dicarboxylic acid or an ester thereof.

12. A process as claimed in claim 11 wherein the polyethylene glycol monoamine has the formula NH₂-(CH₂CH₂O)ₓ-H, where x ranges from 3 to 4.

13. A process as claimed in claim 11 or claim 12 wherein the dicarboxylic acid has the formula HOOC-R-COOH, where R' is alkylene or arylene having from 3 to 34 carbon atoms.

14. A process as claimed in any one of claims 11 to 13 wherein the dicarboxylic acid is adipic acid, terephthalic acid, isophthalic acid, t-butyl isophthalic acid, 1,1,3-trimethyl-5-carboxy-3-(p-carboxyphenyl) indane, dimer acid having about 36 carbon atoms or mixtures thereof.

15. A process as claimed in any one of claims 11 to 14 wherein the reaction is conducted at a temperature between about 180 and 250°C.

## Patentansprüche

1. Ein Verfahren zur Herstellung eines Polyamid-Esters, welches umfaßt, daß ein Polyethylenglykolmonoamin mit der Formel NH₂-(CH₂CH₂O)ₓ-H, in der x im Bereich von 3 bis 6 liegt, mit einer ersten Dicarbonsäure und einer zweiten Dicarbonsäure zur Reaktion gebracht wird, um den Polyamid-Ester zu bilden, wobei die erste und die zweite Dicarbonsäure unabhängig voneinander aliphatische oder aromatische Dicarbonsäuren sind, mit der Maßgabe, daß die erste und die zweite Säure verschieden sein müssen, wenn sie beide aliphatisch sind.

2. Ein Verfahren nach Anspruch 1, dadurch gekennzeichnet, daß die Dicarbonsäuren die Formel HOOC-R-COOH haben, wobei R Alkylen oder Arylen mit von 3 bis 34 Kohlenstoffatomen ist.

3. Ein Verfahren nach Anspruch 1 oder Anspruch 2, dadurch gekennzeichnet, daß eine der Dicarbonsäuren Terephthalsäure ist.

4. Ein Verfahren nach einem der Ansprüche 1 bis 3, das einen Katalysator der Formel Ti(OR)₄, in der R ein Alkylrest mit von 1 bis 8 Kohlenstoffatomen ist; Zink-, Antimon- und Mangansalze von Carbonsäuren; und Mischungen derselben einsetzt.

5. Ein Verfahren nach einem der Ansprüche 1 bis 4, welches umfaßt:
(a) Zur-Reaktion-Bringen eines Polyethylenglykolmonoamins mit der Formel NH₂-(CH₂CH₂O)ₓ-H, in der x im Bereich von 3 bis 6 liegt, mit einer ersten Dicarbonsäure, um ein Zwischenprodukt zu bilden; und
(b) Zur-Reaktion-Bringen des Zwischenproduktes mit wenigstens einer zweiten Dicarbonsäure, um den Polyamid-Ester zu bilden.

6. Ein Verfahren nach Anspruch 5, wobei das Polyethylenglykolmonoamin mit der ersten Dicarbonsäure in der Abwesenheit eines Katalysators, aber in der Gegenwart von Wärme zur Reaktion gebracht wird und das dadurch gebildete Zwischenprodukt mit der zweiten Dicarbonsäure in der Gegenwart eines Katalysators zur Reaktion gebracht wird.

7. Ein Polyamid-Ester von Formel: 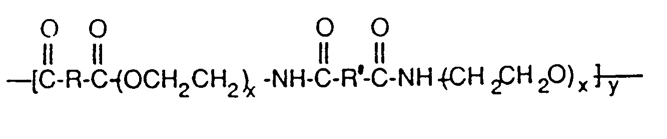 in der R und R' Dicarbonsäurereste darstellen, von denen jeder 3 bis 34 Kohlenstoffatome aufweist, wobei, wenn sowohl R als auch R' aliphatische Dicarbonsäurereste darstellen, R und R' verschieden sein müssen, wobei R und R' identisch oder verschieden sein können; x im Bereich von 3 bis 6 liegt; und y im Bereich von 2 bis 50 liegt.

8. Ein Polyamid-Ester nach Anspruch 7, in dem R und R' jeweils von 4 bis 10 Kohlenstoffatome aufweisen, x im Bereich von 3 bis 5 liegt und y im Bereich von 2 bis 30 liegt.

9. Ein Polyamid-Ester nach Anspruch 7 und Anspruch 8 von Formel:

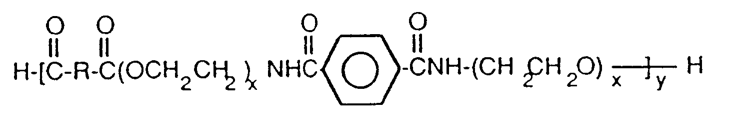

10. Ein Bis-hydroxydiamid von Formel: 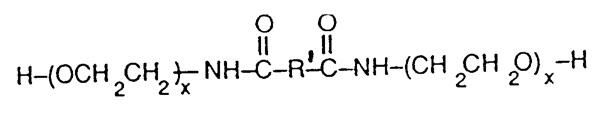 in der R' eine Alkylen- oder Aryleneinheit mit 3 bis 34 Kohlenstoffatomen ist und in der x im Bereich von 3 bis 6 liegt.

11. Ein Verfahren zur Herstellung eines Bis-hydroxydiamids nach Anspruch 10, welches umfaßt, daß wenigstens zwei Mol eines Polyethylenglykolmonoamins pro Mol einer Dicarbonsäure oder eines Esters derselben zur Reaktion gebracht werden.

12. Ein Verfahren nach Anspruch 11, wobei das Polyethylenglykolmonoamin die Formel NH₂-(CH₂CH₂O)ₓ-H besitzt, in der x im Bereich von 3 bis 4 liegt.

13. Ein Verfahren nach Anspruch 11 oder Anspruch 12, wobei die Dicarbonsäure die Formel HOOC-R-COOH besitzt, wobei R' ein Alkylen oder Arylen mit 3 bis 34 Kohlenstoffatomen ist.

14. Ein Verfahren nach einem der Ansprüche 11 bis 13, wobei die Dicarbonsäure Adipinsäure, Terephthalsäure, Isophthalsäure, tert.-Butylisophthalsäure, 1,1,3-Trimethyl-5-carboxy-3-(p-carboxyphenyl)indan, Dimersäure mit etwa 36 Kohlenstoffatomen oder Mischungen derselben ist.

15. Ein Verfahren nach einem der Ansprüche 11 bis 14, wobei die Reaktion bei einer Temperatur zwischen etwa 180 und 250°C durchgeführt wird.

## Revendications

1. Procédé pour la préparation d'un polyamide ester, qui comprend la réaction d'une polyéthylèneglycol monoamine ayant la formule NH₂-(CH₂CH₂O)ₓ-H, où x va de 3 à 6, avec un premier acide dicarboxylique et un second acide dicarboxylique pour former le polyamide ester, où les premier et second acides dicarboxyliques sont indépendamment des acides dicarboxyliques aliphatiques ou aromatiques, avec la condition que les premier et second acides soient différents s'ils sont tous les deux aliphatiques.

2. Procédé selon la revendication 1, caractérisé en ce que les acides dicarboxyliques ont la formule HOOC-R-COOH, où R est un groupe alkylène ou arylène ayant de 3 à 34 atomes de carbone.

3. Procédé selon la revendication 1 ou la revendication 2, caractérisé en ce que l'un des acides dicarboxyliques est l'acide téréphtalique.

4. Procédé selon l'une quelconque des revendications 1 à 3, qui emploie un catalyseur de formule Ti(OR)₄ où R est un radical alkyle ayant de 1 à 8 atomes de carbone ; des sels de zinc, d'antimoine et de manganèse d'acides carboxyliques ; et des mélanges de ceux-ci.

5. Procédé selon l'une quelconque des revendications 1 à 4, qui comprend :
(a) la réaction d'une polyéthylèneglycol monoamine ayant la formule NH₂-(CH₂CH₂O)ₓ-H, où x va de 3 à 6, avec un premier acide dicarboxylique pour former un produit intermédiaire ; et
(b) la réaction du produit intermédiaire avec au moins un second acide dicarboxylique pour former le polyamide ester.

6. Procédé selon la revendication 5, dans lequel on fait réagir la polyéthylèneglycol monoamine avec le premier acide dicarboxylique en l'absence d'un catalyseur mais en présence de chaleur, et on fait réagir le produit intermédiaire ainsi formé avec le second acide dicarboxylique en présence d'un catalyseur.

7. Polyamide ester de formule : 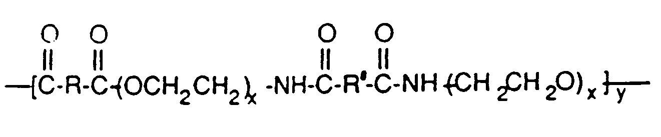 où R et R' représentent des radicaux acide dicarboxylique, chacun ayant de 3 à 34 atomes de carbone, dans lequel si R ainsi que R' représentent des radicaux acide dicaboxylique aliphatique, R et R' doivent être différents, R et R' peuvent être les mêmes ou différents ; x va de 3 à 6 ; et y va de 2 à 50.

8. Polyamide ester selon la revendication 7, où R et R' ont chacun de 4 à 10 atomes de carbone, x va de 3 à 5, et y va de 2 à 30.

9. Polyamide ester selon la revendication 7 ou la revendication 8, de formule :

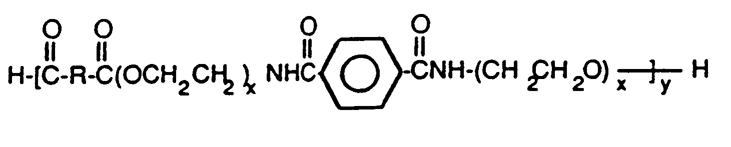

10. Bis-hydroxy diamide de formule : 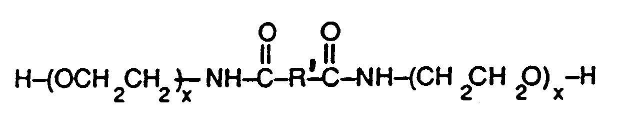 où R' est une portion alkylène ou arylène ayant de 3 à 34 atomes de carbone et où x va de 3 à 6.

11. Procédé pour la préparation d'un bis-hydroxy diamide selon la revendication 10, qui comprend la réaction d'au moins deux moles d'une polyéthylèneglycol monoamine par mole d'un acide dicarboxylique ou d'un ester de celui-ci.

12. Procédé selon la revendication 11, dans lequel la polyéthylèneglycol monoamine a la formule NH₂-(CH₂CH₂O)ₓ-H, où x va de 3 à 4.

13. Procédé selon la revendication 11 ou la revendication 12, dans lequel l'acide dicarboxylique a la formule HOOC-R-COOH, où R est un groupe alkylène ou arylène ayant de 3 à 34 atomes de carbone.

14. Procédé selon l'une quelconque des revendications 11 à 13, dans lequel l'acide dicarboxylique est l'acide adipique, l'acide téréphtalique, l'acide isophtalique, l'acide t-butylisophtalique, le 1,1,3-triméthyl-5-carboxy-3-(p-carboxyphényl)indane, un acide dimère ayant environ 36 atomes de carbone, ou des mélanges de ceux-ci.

15. Procédé selon l'une quelconque des revendications 11 à 14, dans lequel la réaction est effectuée à une température comprise entre environ 180 et 250 °C.
